# FASCICULE DE BREVET EUROPEEN

(11) **EP 4 207 675 B1**
(45) Date de publication et mention de la délivrance du brevet: **29.01.2025**
(21) Numéro de dépôt: 22216885.8
(22) Date de dépôt: 28.12.2022
(51) Int. Cl.: H04L 9/30, H04L 9/32

(54) **PROCEDE DE TRANSMISSION ET DE RECEPTION DE DONNEES DE CONSOMMATION ET DISPOSITIFS METTANT EN OEUVRE LESDITS PROCEDES**
VERFAHREN ZUM SENDEN UND EMPFANGEN VON VERBRAUCHSDATEN UND VORRICHTUNGEN ZUR DURCHFÜHRUNG DES VERFAHRENS
METHOD FOR TRANSMITTING AND RECEIVING CONSUMPTION DATA AND DEVICES IMPLEMENTING SAID METHODS

(30) Priorité: 03.01.2022 FR 2200007; 24.03.2022 FR 2202603
(43) Date de publication de la demande: 05.07.2023
(73) Titulaire: Sagemcom Energy & Telecom SAS, 92270 Bois-Colombes (FR)
(72) Inventeur: TEBOULLE, Henri, 92500 RUEIL MALMAISON (FR); LECAPPON, Jean-Paul, 92500 RUEIL MALMAISON (FR)
(74) Mandataire: Cabinet Le Guen Maillet

(56) Documents cités:
- EP-A1- 2 552 048
- GB-A- 2 588 647
- US-A1- 2016 163 177
- EU: "DIRECTIVE 2014/32/EU OF THE EUROPEAN PARLIAMENT AND OF THE COUNCIL", 26 February 2014 (2014-02-26), pages 1 - 102, XP093142572, Retrieved from the Internet <URL:https://eur-lex.europa.eu/eli/dir/2014/32/oj> [retrieved on 20240318]

## Description

### DOMAINE TECHNIQUE

Au moins un mode de réalisation concerne un procédé de transmission de données de consommation par un compteur à destination d'un système de gestion desdites données de consommation. Au moins un autre mode de réalisation concerne un procédé de réception des données de consommation. Des dispositifs mettant en œuvre lesdits procédés de transmission et de réception sont également décrits.

### ETAT DE LA TECHNIQUE ANTERIEURE

Il est connu des compteurs intelligents, de type compteurs électriques, compteurs d'énergie thermique ou compteurs à fluides, e.g. gaz ou eau, qui comprennent des interfaces de communication permettant à un système de gestion automatisée d'effectuer une collecte à distance de données de consommation. Par exemple, ces compteurs intelligents comportent une (ou des) interface(s) de communication de type CPL (acronyme de « Courant Porteur en Ligne ») et/ou de type radio. Ils transmettent alors par ces interfaces de communication les données de consommation d'un client, e.g. sous la forme de trames, pour une remontée de ces données de consommation, à intervalles réguliers ou non, jusqu'à un système d'information les traitant de manière centralisée. Ces données de consommation sont utilisées par le système d'information notamment pour des opérations de facturation du client consommateur par un fournisseur de service. A cet effet, des procédés ou logiciels de métrologie sont utilisés par les compteurs pour générer ces données de consommation à partir de mesures qui doivent respecter les exigences de la métrologie légale. La métrologie est la science de la mesure et ses applications. Elle comprend tous les aspects théoriques et pratiques des mesurages. La métrologie légale est une partie de la métrologie qui se rapporte aux activités qui résultent d'exigences réglementaires et qui s'appliquent aux mesurages, aux unités de mesure, aux instruments de mesure. Ainsi, la métrologie légale inclut en outre l'établissement d'exigences légales, le contrôle/l'évaluation de la conformité de produits réglementés et d'activités réglementées, la supervision des produits réglementés et des activités réglementées et la mise en place des infrastructures nécessaires à la traçabilité des mesures réglementées et des instruments de mesure.

Par exemple, la directive 2014/32/UE, connue sous l'acronyme MID pour « Measuring Instruments Directive », réglemente la mise sur le marché d'une grande partie des instruments de mesure (e.g. compteurs électriques, de gaz, d'énergie thermique ou d'eau) couverts par la métrologie légale. Elle fixe les exigences techniques applicables à leur conception et leur production. Ainsi, seuls les compteurs certifiés MID peuvent servir à la facturation. Lors de la certification, un numéro de certificat MID est attribué au compteur par l'organisme de certification.

Les données de consommation utilisées pour la facturation doivent être exemptes de toute erreur pour éviter d'éventuels litiges liés à une contestation de leurs valeurs. Les erreurs peuvent provenir notamment d'une modification, lors de leur transmission, des trames comprenant des données de consommation. Elles peuvent également provenir de l'utilisation par un compteur d'une version incorrecte, e.g. obsolète, du logiciel de métrologie. Actuellement, en cas de litige sur la valeur des données de consommation entre un client et le fournisseur de service, une solution consiste pour le fournisseur de service à envoyer chez le client un opérateur pour effectuer une lecture directe sur un afficheur du compteur de la donnée de consommation. Une telle solution n'est pas satisfaisante dans la mesure où elle nécessite d'une part que le compteur soit équipé d'un afficheur et d'autre part que l'opérateur se déplace au domicile du client ce qui est coûteux.

Le document US 2016/163177 A1 décrit un système de contrôle de la consommation d'eau et d'énergie et/ou de détection des fuites conçu pour fonctionner avec un système d'approvisionnement en eau d'une installation résidentielle ou industrielle ou commerciale. Le document GB 2 588 647 A décrit un procédé d'attestation et de génération de clés pour des dispositifs contraints.

Le document EP 2552048 A1 décrit un terminal de relevé à distance de compteur qui génère des données de signature électronique sur la base des informations de relevé comprenant une valeur mesurée acquise par les compteurs d'électricité, la date et l'heure du relevé, et un identifiant de compteur d'électricité, et transmet les données de signature électronique générées et les informations de relevé de compteur à un serveur de gestion des données de relevé de compteur.

Il est souhaitable de pallier ces différents inconvénients de l'état de la technique. Il est notamment souhaitable de proposer un procédé de transmission de données de consommation qui soit fiable et qui permette notamment de certifier que les données de consommation reçues par le système d'information proviennent bien du logiciel certifié du compteur dont elles sont censées provenir et qu'en outre elles ont été générées par une version correcte du logiciel de métrologie.

### EXPOSE DE L'INVENTION

Au moins un mode de réalisation concerne un procédé de transmission de données de consommation par un compteur à destination d'un système de gestion de données de compteurs. Le procédé comprend les étapes suivantes mises en œuvre par ledit compteur :
- obtenir une donnée de consommation, ladite donnée étant obtenue par un logiciel de métrologie ;
- générer une empreinte à partir d'un quadruplet comprenant ladite donnée de consommation obtenue et un triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- chiffrer ladite empreinte avec une clé privée connue du seul compteur, ladite empreinte chiffrée étant une signature ; et
- transmettre à destination du système de gestion desdites données de consommation une trame comprenant un identifiant dudit compteur, ladite donnée de consommation obtenue et ladite signature.

Le procédé décrit permet avantageusement de certifier que la donnée de consommation reçue provient bien du bon compteur, i.e. du compteur censé avoir envoyé ladite donnée de consommation, et qu'en outre cette donnée de consommation a été obtenue par une version correcte du logiciel de métrologie.

Selon un mode de réalisation particulier, générer une empreinte comprend appliquer une fonction de hachage audit triplet.

Selon un mode de réalisation particulier, la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

Selon un mode de réalisation particulier, chiffrer ladite empreinte avec une clé privée connue du seul compteur comprend appliquer un chiffrement asymétrique à courbes elliptiques.

Selon un mode de réalisation particulier, lesdites données de consommation sont des données de consommation d'électricité, de gaz, d'essence, d'énergie thermique ou d'eau. Au moins un mode de réalisation concerne un procédé de réception de données de consommation par un système de gestion desdites données de consommation, ledit système de gestion desdites données de consommation stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation. Le procédé comprend les étapes suivantes mises en œuvre par ledit système de gestion desdites données de consommation :
- -recevoir une trame comprenant un identifiant d'un compteur, une donnée de consommation et une signature ;
- déchiffrer ladite signature avec une clé publique associée au compteur identifié par ledit identifiant ;
- générer une empreinte à partir d'un quadruplet comprenant ladite donnée de consommation obtenue et dudit triplet associé dans ladite mémoire audit compteur identifié par ledit identifiant ;
- comparer ladite signature déchiffrée et ladite empreinte générée et en cas d'inégalité envoyer un signal d'alarme.

Au moins un mode de réalisation concerne un procédé de transmission de données de consommation par un compteur à destination d'un système de gestion desdites données de consommation, ledit système de gestion desdites données de consommation stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation. Le procédé comprend les étapes suivantes mises en œuvre par ledit compteur :
- obtenir une donnée de consommation, ladite donnée étant obtenue par un logiciel de métrologie ;
- générer une empreinte à partir d'un quadruplet comprenant ladite donnée de consommation obtenue et un triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- chiffrer ladite empreinte avec une clé privée connue du seul compteur, ladite empreinte chiffrée étant une signature ; et
- transmettre à destination du système de gestion desdites données de consommation une trame comprenant un identifiant dudit compteur, ladite donnée de consommation obtenue et ladite signature.

Le procédé comprend en outre les étapes suivantes mises en œuvre par ledit système de gestion desdites données de consommation :
- -recevoir ladite trame ;
- déchiffrer ladite signature avec une clé publique associée au compteur identifié par ledit identifiant ;
- générer une empreinte à partir d'un quadruplet comprenant ladite donnée de consommation obtenue et dudit triplet associé dans ladite mémoire audit compteur identifié par ledit identifiant ; et
- comparer ladite signature déchiffrée et ladite empreinte générée et en cas d'inégalité envoyer un signal d'alarme.

Au moins un mode de réalisation concerne un compteur configuré pour transmettre des données de consommation à un système de gestion desdites données de consommation. Le compteur comprend :
- des moyens pour obtenir une donnée de consommation, ladite donnée étant obtenue par un logiciel de métrologie ;
- des moyens pour générer une empreinte à partir d'un quadruplet comprenant ladite donnée de consommation obtenue et un triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- des moyens pour chiffrer ladite empreinte avec une clé privée connue du seul compteur, ladite empreinte chiffrée étant une signature ; et
- des moyens pour transmettre à destination du système de gestion desdites données de consommation une trame comprenant un identifiant dudit compteur, ladite donnée de consommation obtenue et ladite signature.

Au moins un mode de réalisation concerne un système de gestion de données de compteurs stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation, ledit système de gestion de données de compteurs comprenant :
- des moyens pour recevoir une trame comprenant un identifiant d'un compteur, une donnée de consommation et une signature ;
- des moyens pour déchiffrer ladite signature avec une clé publique associée au compteur identifié par ledit identifiant ;
- des moyens pour générer une empreinte à partir d'un quadruplet comprenant ladite donnée de consommation obtenue et dudit triplet associé dans ladite mémoire audit compteur identifié par ledit identifiant ; et
- des moyens pour comparer ladite signature déchiffrée et ladite empreinte générée et en cas d'inégalité envoyer un signal d'alarme.

Au moins un mode de réalisation concerne un système de gestion automatisée configuré pour effectuer une collecte à distance de données de consommation, ledit système de gestion automatisée comprenant au moins un compteur selon l'un des modes de réalisation précédents et un système de gestion de données de compteurs selon l'un des modes de réalisation précédents.

Au moins un mode de réalisation concerne un produit programme d'ordinateur comprenant des instructions pour mettre en œuvre le procédé de transmission ou le procédé de réception selon l'un quelconque des modes de réalisation décrits précédemment, lorsque ledit programme est exécuté par un processeur.

Au moins un mode de réalisation concerne un support de stockage qui stocke un programme d'ordinateur comprenant des instructions pour mettre en œuvre le procédé de transmission ou le procédé de réception selon l'un quelconque des modes de réalisation décrits précédemment lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre schématiquement un système de gestion automatisée configuré pour réaliser une relève de données de consommation auprès de dispositifs de mesure communiquant selon un mode particulier de réalisation ;
[Fig. 2] illustre schématiquement un exemple d'architecture matérielle d'un compteur intelligent d'un système de gestion automatisée selon un mode particulier de réalisation ; [Fig. 3] illustre schématiquement un exemple d'architecture matérielle d'un système de gestion des données de compteur selon un mode particulier de réalisation ;
[Fig. 4] illustre un procédé de transmission d'une donnée de consommation par un compteur selon un mode particulier de réalisation non couvert par les revendications ;
[Fig. 5] illustre une trame transmise par un compteur à destination d'un système de gestion des données de compteur ;
[Fig. 6] illustre un procédé de réception d'une donnée de consommation par un système de gestion des données de consommation selon un mode particulier de réalisation non couvert par les revendications ;
[Fig. 7] illustre un procédé de transmission d'une donnée de consommation par un compteur selon un mode particulier de réalisation ; et
[Fig. 8] illustre un procédé de réception d'une donnée de consommation par un système de gestion des données de consommation selon un mode particulier de réalisation.

### EXPOSE DETAILLE DE MODES DE REALISATION

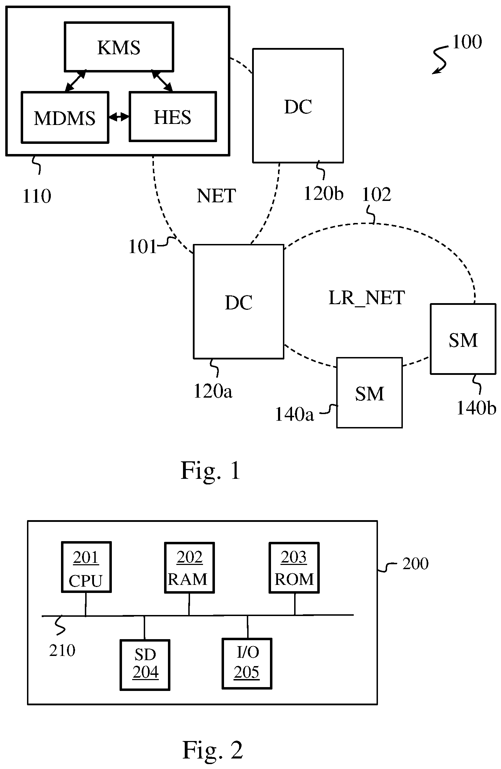

La Fig. 1 illustre ainsi schématiquement un système de gestion automatisée 100 dans lequel la présente invention peut être implémentée. Le système de gestion automatisée 100 est configuré pour réaliser une relève de données de consommation auprès de dispositifs de mesure communicants 140a et 140b, e.g. des compteurs intelligents SM (« Smart Meters » en anglais). Les compteurs intelligents SM 140a et 140b sont par exemple des compteurs électriques, des compteurs de gaz, des compteurs d'énergie thermique ou des compteurs d'eau ou de tout autre type fluide, e.g. de l'essence, dont la consommation peut être mesurée grâce à un logiciel de métrologie. Ces compteurs intelligents 140a et 140b ont la capacité de communiquer par transmission radio et/ou CPL avec un système d'information SI (« Information System » en anglais) 110. Le système d'information SI 110 comprend un système de tête de réseau HES (acronyme de « Head-End System »), un système de gestion des données de compteurs MDMS (acronyme de « Meter Data Management System ») et un système de gestion de clés KMS (acronyme de « Key Management System »).

Le rôle du système d'information SI 110 est de surveiller des opérations de mesure effectuées par les compteurs intelligents SM 140a et 140b. Pour ce faire, le système d'information SI 110 délègue la gestion d'un réseau de collecte à des concentrateurs de données DC (acronyme de « Data Concentrateur »). Deux DC 120a, 120b sont représentés sur la Fig. 1 à titre d'exemple. Le système de gestion automatisée 100 comporte typiquement une pluralité de tels DC qui envoient des trames au système de tête de réseau HES.

Les différents systèmes du SI communiquent entre eux au travers d'un réseau (non représenté sur la Fig.1), e.g. un réseau privé de type VPN ou l'Internet. Le système de tête de réseau HES échange avec les concentrateurs de données DC 120a, 120b par le biais d'un réseau de communication NET 101. Par exemple, le réseau de communication NET 101 est l'Internet. Dans d'autres modes de réalisation, le réseau de communication NET 101 est un réseau de communication sans-fil, par exemple de type GPRS (« General Packet Radio Service » en anglais), UMTS (« Universal Mobile Telecommunication System » en anglais), LTE (« Long-Term Evolution » en anglais), NB-IoT (« Narrowband Internet of Things »), 2G, 3G, 4G ou 5G.

Chaque concentrateur de données DC 120a, 120b gère les communications avec un ensemble de compteurs intelligents SM par le biais d'un réseau de communication LR_NET 102. Le réseau de communication LR_NET 102 est un réseau de communication de type CPL (acronyme de « courants porteurs en ligne ») ou un réseau de communication sans-fil, e.g. un réseau sans-fil à longue portée (« Long Range » en anglais). Préférentiellement, le réseau de communication LR_NET 102 est un réseau étendu à faible puissance LPWAN, par exemple selon la technologie LoRaWAN ou NB-IoT. Selon une variante, un compteur intelligent SM peut communiquer avec un concentrateur de données DC en utilisant deux réseaux distincts, e.g. un réseau CPL et un réseau sans fil.

Grâce au réseau de communication LR_NET 102, le concentrateur de données DC 120a communique directement ou indirectement (e.g. au travers de compteurs intelligents auxquels est attribué un rôle de relais REL) avec les compteurs intelligents SM 140a, 140b qui lui sont appairés.

Ainsi, les concentrateurs de données DC collectent et envoient périodiquement, par exemple une à plusieurs fois par jour, à destination du système d'information SI 110, des données de consommation provenant des compteurs intelligents SM 140a, 140b qui lui sont appairés.

Dans une variante de réalisation non représentée sur la Fig.1, un compteur intelligent SM peut communiquer directement avec le SI 110 sans passer par un DC.

Dans le cadre de la métrologie légale, un code de redondance cyclique ou CRC (acronyme anglais de « Cyclic Redundancy Code ») est calculé (CRC32 calculé sur 32 bit à l'aide d'un polynôme normalisé) conformément lors de la génération d'un logiciel de métrologie. Ce code de redondance cyclique est intégré au logiciel de métrologie. Le logiciel métrologique est validé et ensuite envoyé en certification pour obtenir une certification MID. Une fois la certification MID obtenue, un numéro de certification est transmis au système de gestion des données de compteurs MDMS qui stocke alors en mémoire pour chaque compteur certifié MID, un code CRC du logiciel de métrologie et un numéro de certification MID en association avec le numéro de série du compteur en question.

La Fig. 2 illustre schématiquement un exemple d'architecture matérielle d'un compteur intelligent 200 du système de gestion automatisée 100 selon un mode particulier de réalisation.

Le compteur intelligent 200 comprend, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface d'entrée-sortie I/O 205, notamment une interface de communication avec le réseau de communication LR_NET 102, le cas échéant avec le réseau de communication NET 101 en cas de communication directe avec le SI.

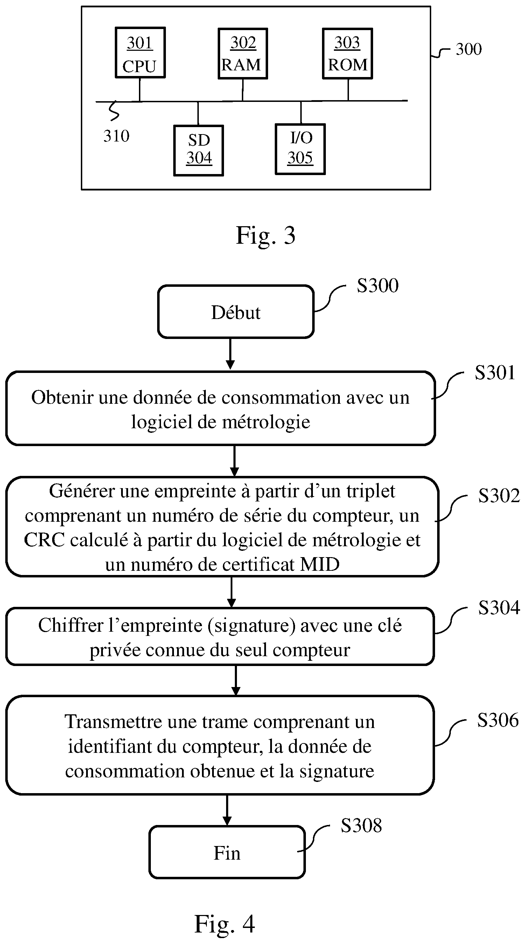

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le compteur intelligent 200 est mis sous tension, le processeur 201 est capable de lire de la RAM 202 des instructions et de les exécuter. Ces instructions forment un programme d'ordinateur causant la mise en œuvre, par le processeur 201, des étapes et procédés décrits ci-après en lien avec la Fig. 4.

Tout ou partie des étapes et procédés décrits ci-après en lien avec la Fig. 4 peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le compteur intelligent 200 comprend de la circuiterie électronique agencée et configurée pour implémenter les étapes et procédés ci-après en lien avec la Fig. 4.

La Fig. 3 illustre schématiquement un exemple d'architecture matérielle d'un système de gestion des données de compteurs MDMS 300 du système de gestion automatisée 100 selon un mode particulier de réalisation.

Le système de gestion des données de compteurs MDMS 300 comprend, reliés par un bus de communication 310 : un processeur ou CPU (« Central Processing Unit » en anglais) 301 ; une mémoire vive RAM (« Random Access Memory » en anglais) 302 ; une mémoire morte ROM (« Read Only Memory » en anglais) 303, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 304 ; au moins une interface d'entrée-sortie I/O 305 qui comprend notamment une interface de communication avec le réseau NET.

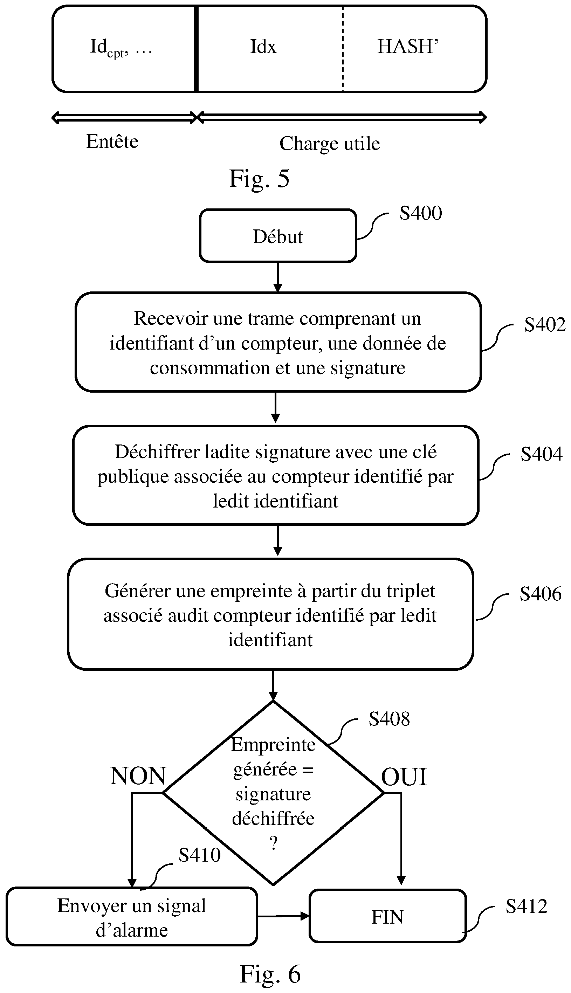

Le processeur 301 est capable d'exécuter des instructions chargées dans la RAM 302 à partir de la ROM 303, d'une mémoire externe (non représentée), d'un support de stockage, tel qu'une carte SD, ou d'un réseau de communication (non représenté). Lorsque le système de gestion des données de compteurs MDMS 300 est mis sous tension, le processeur 301 est capable de lire de la RAM 302 des instructions et de les exécuter. Ces instructions forment un programme d'ordinateur causant la mise en œuvre, par le processeur 301, des étapes et procédés décrits ci-après en lien avec la Fig. 6.

Tout ou partie des étapes et procédés décrits ci-après en lien avec la Fig. 6 peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). D'une manière générale, le système de gestion des données de compteurs MDMS 300 comprend de la circuiterie électronique agencée et configurée pour implémenter les étapes et procédés décrits ci-après en lien avec la Fig. 6.

La Fig. 4 illustre un procédé de transmission d'une donnée de consommation, notée Idx, par un compteur selon un mode particulier de réalisation non couvert par les revendications. La donnée de consommation est par exemple un index d'un compteur électrique, d'eau, etc.

Le procédé démarre lors d'une étape S300.

Lors d'une étape S301, le compteur obtient une donnée de consommation grâce à un logiciel de métrologie.

Lors d'une étape S302, le compteur génère une empreinte notée HASH à partir d'un triplet comprenant son numéro de série, un code de redondance cyclique ou CRC (acronyme anglais de « Cyclic Redundancy Code ») calculé à partir du logiciel de métrologie utilisé par le compteur et un numéro de certificat MID attribué au compteur, ledit certificat certifiant que le compteur est autorisé à être utilisé pour des opérations de facturation de consommation. A cet effet, une fonction de hachage est utilisée, e.g. une fonction de la famille SHA-2. On nomme fonction de hachage H(.), de l'anglais « hash function » une fonction particulière qui, à partir d'une donnée fournie en entrée, calcule une empreinte numérique servant à identifier rapidement la donnée initiale. Autrement dit à un triplet donné correspond une empreinte unique, i.e. le résultat de la fonction de hachage. Dès lors, pour deux triplets différents T1 et T2, le compteur génère deux empreintes S1=H(T1) et S2=H(T2) où S1 et S2 sont différentes.

Dans un mode de réalisation, la fonction H(.) est une fonction de la famille SHA-2, e.g. SHA-224, SHA-256, SHA-384 ou SHA-512. Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées, e.g. une fonction SHA-3, une fonction MD4, une fonction MD5, une fonction SHA-1, toutes bien connues dans le domaine de la cryptographie ; ces exemples n'étant bien évidemment pas limitatifs.

Dans une variante de réalisation, une étape optionnelle de bourrage (« padding » en anglais) est appliquée sur le triplet afin d'obtenir un nombre entier d'octets avant d'appliquer la fonction de hachage H(.).

Lors d'une étape S304, le compteur chiffre l'empreinte générée avec une clé privée connue du seul compteur. L'empreinte chiffrée est une signature et est notée HASH'. Cette clé privée a été préalablement générée par le compteur à partir de son numéro de série. Dans un mode particulier de réalisation, la clé privée est générée en appliquant un opérateur « OU exclusif » entre une valeur aléatoire de N bits propre au compteur et H(numéro de série), e.g. N=256 et H() est la fonction SHA-256 pour obtenir une clé privée de 256 bits. A cette clé privée, est associée une clé publique connue notamment du système de gestion de clés KMS. Le chiffrement est un chiffrement asymétrique, e.g. à courbes elliptiques ou RSA. Le chiffrement asymétrique est une technique qui utilise deux clefs de chiffrement : une clé publique et une clé privée. La clé publique est partagée sans restriction alors que la clé privée n'est connue que du seul compteur l'ayant générée. La clé publique associée à la clé privée d'un compteur est notamment connue du SI, plus particulièrement du système de gestion de clés KMS. Ainsi, le compteur utilise sa clé privée pour chiffrer l'empreinte HASH afin d'obtenir une signature HASH' que le destinataire, en l'occurrence le système de gestion des données de compteurs MDMS, peut déchiffrer avec la clé publique du compteur qu'il aura récupérée auprès du KMS et ainsi authentifier le compteur émetteur de la trame.

L'utilisation d'un chiffrement à courbes elliptiques permet avantageusement de limiter la taille de la signature HASH'. En effet, un chiffrement asymétrique de type RSA utilise des clés de chiffrement d'une plus grande taille, e.g. de 2048 à 8192 bits, qu'un chiffrement asymétrique à courbes elliptiques qui utilise des clés de chiffrement de taille 256 à 384 bits. La taille de HASH' dépend d'une part de la taille de HASH et d'autre part de la taille de la clé privée du compteur. Ainsi, quand l'empreinte HASH et la clé privée du compteur sont chacune sur 256 bits, la taille de la signature *HASH'* est de 512 bits. Quand HASH et la clé privée du compteur sont chacune sur 384 bits, la taille de *HASH'* est de 768 bits.

Lors d'une étape S306, le compteur transmet une trame T comprenant un entête et des données utiles (« payload » en anglais) à destination du système de gestion des données de compteurs MDMS. Une telle trame T est illustrée par la Fig. 5. La trame est générée conformément à un protocole de communication comme G3-PLC, PRIME, 2G, 3G, 4G ou 5G. L'entête de la trame comprend notamment un identifiant du compteur Id_{cpt} qui transmet la trame et d'autres données, e.g. des données de synchronisation et des données de contrôle requises pour démoduler la trame de données, qui dépendent du protocole de communication utilisé pour la transmission. Les données utiles comprennent la signature HASH' et la donnée de consommation Idx du compteur. La trame est transmise selon le protocole de communication sélectionné au système de gestion des données de compteurs MDMS par exemple via un concentrateur de données comme illustré sur la Fig. 1.

Le procédé se termine à une étape S308.

Ce procédé est particulièrement avantageux dans la mesure où seule la donnée de consommation est transmise dans la charge utile de la trame (« payload » en anglais). En effet, le CRC du logiciel de métrologie et le numéro de certificat MID ne sont pas transmis. La charge réseau s'en trouve donc allégée.

La Fig. 6 illustre un procédé de réception d'une donnée de consommation en provenance d'un compteur par un système de gestion des données de compteurs selon un mode particulier de réalisation non couvert par les revendications.

Le procédé est mis en œuvre dans le système d'information SI, plus particulièrement par le système de gestion des données de compteurs MDMS du système d'information SI. Le système de gestion des données de compteurs MDMS comprend notamment une mémoire non volatile dans laquelle sont stockés les numéros de série des compteurs enregistrés auprès du système d'information SI. Pour chaque compteur et donc pour chaque numéro de série le système de gestion des données de compteurs MDMS stocke également un numéro de certificat MID ainsi qu'un CRC du logiciel de métrologie.

Le procédé démarre lors d'une étape S400.

Lors d'une étape S402, le système de gestion des données de compteurs MDMS reçoit la trame T comprenant dans ses données utiles une signature HASH' et une donnée de consommation du compteur et dans son entête l'identifiant Id_{cpt} du compteur.

Lors d'une étape S404, le système de gestion des données de compteurs MDMS déchiffre ladite signature avec une clé publique associée au compteur identifié dans l'entête de la trame par l'identifiant Id_{cpt}. En effet, à partir de l'identifiant Id_{cpt} du compteur présent dans l'entête de la trame, le MDMS retrouve le numéro de série du compteur puis la clé publique associée. Le MDMS informe le KMS qu'il souhaite récupérer la clé publique associée au compteur identifié par son numéro de série et/ou par l'identifiant Id_{cpt}. Le MDMS envoie une requête à cet effet au KMS qui en retour lui renvoie la clé publique associée au compteur. Cette clé publique est utilisée pour déchiffrer la signature reçue HASH'.

Lors d'une étape S406, le MDMS génère une empreinte HASH" à partir du triplet associé au compteur identifié Id_{cpt}. Le triplet comprend le numéro de série, le CRC du logiciel de métrologie et le numéro de certificat MID associé au compteur identifié par Id_{cpt}, données qui sont stockées dans une mémoire non volatile du MDMS. Autrement dit, le MDMS effectue la même opération que le compteur à l'étape S302 avec les données, i.e. numéro de série, CRC du logiciel de métrologie et numéro de certificat MID, qu'il a à sa disposition pour le compteur identifié par Id_{cpt}. Notamment, le MDMS utilise à l'étape S406, la même fonction de HASH que celle utilisée à l'étape S302.

Lors d'une étape S408, le MDMS compare l'empreinte HASH" générée à l'étape S406 avec l'empreinte, résultat de la signature HASH' déchiffrée à l'étape S404. En cas d'égalité le procédé continue à l'étape S412. En effet, en cas d'égalité le MDMS est certain que la donnée de consommation présente dans la charge utile de la trame T provient bien du bon compteur, i.e. du compteur censé avoir envoyé ladite donnée de consommation, et qu'en outre cette donnée de consommation a été obtenue par une version correcte du logiciel de métrologie. En cas d'inégalité le procédé continue à l'étape S410.

A l'étape S410, le MDMS envoie un signal d'alarme au système d'information SI 110 pour indiquer que la donnée de consommation reçue pose problème soit parce qu'elle ne provient pas du compteur duquel elle est censée provenir, soit parce que le logiciel de métrologie utilisé pour obtenir la donnée de consommation n'est pas correct, e.g. qu'il s'agit d'une mauvaise version du logiciel de métrologie.

Le procédé se termine à une étape S412.

Les procédés décrits en référence aux Figs 4 et 6 fonctionnent en cas de téléchargement d'un nouveau logiciel de métrologie dans un compteur. Lorsqu'un nouveau logiciel de métrologie est téléchargé dans un compteur, les clés privée et publique sont avantageusement conservées. En variante, lesdites clés sont renouvelées. Dans ce dernier cas, afin de fournir la nouvelle clé publique au SI, la nouvelle clé publique est signée avec la nouvelle clé privée et l'ensemble est resigné avec l'ancienne clé privée de manière à certifier que la nouvelle clé publique vient bien du bon compteur, ladite nouvelle clé publique étant transmise quant à elle en clair au KMS.

En référence à nouveau à la Fig. 1, considérons que le compteur 140a met en œuvre le procédé décrit en référence à la Fig. 4. Ainsi, le compteur 140a génère une trame T

comprenant dans sa charge utile une donnée de consommation électrique, et une signature obtenue par la mise en œuvre des étapes S302 et S304. Le compteur 140a transmet ensuite sa trame, par exemple sur le réseau électrique, par courants porteurs en ligne à destination du concentrateur de données DC 120a. La trame générée est par exemple conforme au protocole de communication G3-PLC ou PRIME.

Le concentrateur de données DC 120a reçoit la trame T et la retransmet sur le réseau de communication 101 NET, e.g. un réseau cellulaire de type GPRS, à destination du système d'information SI 110, plus précisément à destination du HES du système d'information SI 110. A cet effet, les données contenues dans la trame T reçue sont récupérées pour être désencapsulées puis réencapsulées dans une trame compatible avec le réseau de communication 101 NET.

Le HES du SI qui est en tête de réseau reçoit la trame T et la transmet au MDMS.

Le MDMS récupère auprès du KMS la clé publique nécessaire à la vérification de la signature contenue dans la charge utile de la trame « A ».

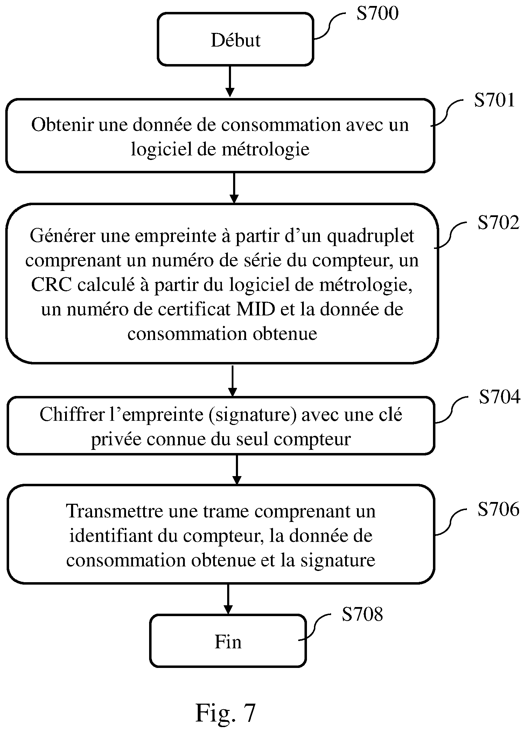

La Fig. 7 illustre un procédé de transmission d'une donnée de consommation, notée Idx, par un compteur selon un mode particulier de réalisation. La donnée de consommation est par exemple un index d'un compteur électrique, d'eau, etc.

Le procédé démarre lors d'une étape S700.

Lors d'une étape S702, le compteur génère une empreinte notée HASH à partir d'un quadruplet comprenant son numéro de série, un code de redondance cyclique ou CRC (acronyme anglais de « Cyclic Redundancy Code ») calculé à partir du logiciel de métrologie utilisé par le compteur, un numéro de certificat MID attribué au compteur et ladite donnée de consommation Idx, ledit certificat certifiant que le compteur est autorisé à être utilisé pour des opérations de facturation de consommation. A cet effet, une fonction de hachage est utilisée, e.g. une fonction de la famille SHA-2. On nomme fonction de hachage H(.), de l'anglais « hash function » une fonction particulière qui, à partir d'une donnée fournie en entrée, calcule une empreinte numérique servant à identifier rapidement la donnée initiale. Autrement dit à un quadruplet donné correspond une empreinte unique, i.e. le résultat de la fonction de hachage. Dès lors, pour deux quadruplets différents T1 et T2, le compteur génère deux empreintes S1=H(T1) et S2=H(T2) où S1 et S2 sont différentes.

Dans un mode de réalisation, la fonction H(.) est une fonction de la famille SHA-2, e.g. SHA-224, SHA-256, SHA-384 ou SHA-512. Dans le cas où la fonction H(.) est de type SHA-256, l'empreinte obtenue HASH comprend 256 bits. Dans le cas où la fonction H est de type SHA-512, l'empreinte obtenue HASH comprend 512 bits. D'autres fonctions peuvent être utilisées, e.g. une fonction SHA-3, une fonction MD4, une fonction MD5, une fonction SHA-1, toutes bien connues dans le domaine de la cryptographie ; ces exemples n'étant bien évidemment pas limitatifs.

Dans une variante de réalisation, une étape optionnelle de bourrage (« padding » en anglais) est appliquée sur le quadruplet afin d'obtenir un nombre entier d'octets avant d'appliquer la fonction de hachage H(.).

Lors d'une étape S704, le compteur chiffre l'empreinte générée avec une clé privée connue du seul compteur. L'empreinte chiffrée est une signature et est notée HASH'. Cette clé privée a été préalablement générée par le compteur à partir de son numéro de série. Dans un mode particulier de réalisation, la clé privée est générée en appliquant un opérateur « OU exclusif » entre une valeur aléatoire de N bits propre au compteur et H(numéro de série), e.g. N=256 et H() est la fonction SHA-256 pour obtenir une clé privée de 256 bits. A cette clé privée, est associée une clé publique connue notamment du système de gestion de clés KMS. Le chiffrement est un chiffrement asymétrique, e.g. à courbes elliptiques ou RSA. Le chiffrement asymétrique est une technique qui utilise deux clefs de chiffrement : une clé publique et une clé privée. La clé publique est partagée sans restriction alors que la clé privée n'est connue que du seul compteur l'ayant générée. La clé publique associée à la clé privée d'un compteur est notamment connue du SI, plus particulièrement du système de gestion de clés KMS. Ainsi, le compteur utilise sa clé privée pour chiffrer l'empreinte HASH afin d'obtenir une signature HASH' que le destinataire, en l'occurrence le système de gestion des données de compteurs MDMS, peut déchiffrer avec la clé publique du compteur qu'il aura récupérée auprès du KMS et ainsi authentifier le compteur émetteur de la trame.

L'utilisation d'un chiffrement à courbes elliptiques permet avantageusement de limiter la taille de la signature HASH'. En effet, un chiffrement asymétrique de type RSA utilise des clés de chiffrement d'une plus grande taille, e.g. de 2048 à 8192 bits, qu'un chiffrement asymétrique à courbes elliptiques qui utilise des clés de chiffrement de taille 256 à 384 bits. La taille de HASH' dépend d'une part de la taille de HASH et d'autre part de la taille de la clé privée du compteur. Ainsi, quand l'empreinte HASH et la clé privée du compteur sont chacune sur 256 bits, la taille de la signature *HASH'* est de 512 bits. Quand HASH et la clé privée du compteur sont chacune sur 384 bits, la taille de *HASH'* est de 768 bits. Lors d'une étape S706, le compteur transmet une trame T comprenant un entête et des données utiles (« payload » en anglais) à destination du système de gestion des données de compteurs MDMS. Une telle trame T est illustrée par la Fig. 5. La trame est générée conformément à un protocole de communication comme G3-PLC, PRIME, 2G, 3G, 4G ou 5G. L'entête de la trame comprend notamment un identifiant du compteur Id_{cpt} qui transmet la trame et d'autres données, e.g. des données de synchronisation et des données de contrôle requises pour démoduler la trame de données, qui dépendent du protocole de communication utilisé pour la transmission. Les données utiles comprennent la signature HASH' et la donnée de consommation Idx du compteur. La trame est transmise selon le protocole de communication sélectionné au système de gestion des données de compteurs MDMS par exemple via un concentrateur de données comme illustré sur la Fig. 1.

Le procédé se termine à une étape S708. Ainsi, dans ce mode de réalisation, la donnée de consommation en plus d'être transmise est utilisée pour générer la signature HASH'.

Ce procédé est particulièrement avantageux dans la mesure où seule la donnée de consommation est transmise dans la charge utile de la trame (« payload » en anglais). En effet, le CRC du logiciel de métrologie et le numéro de certificat MID ne sont pas transmis. La charge réseau s'en trouve donc allégée.

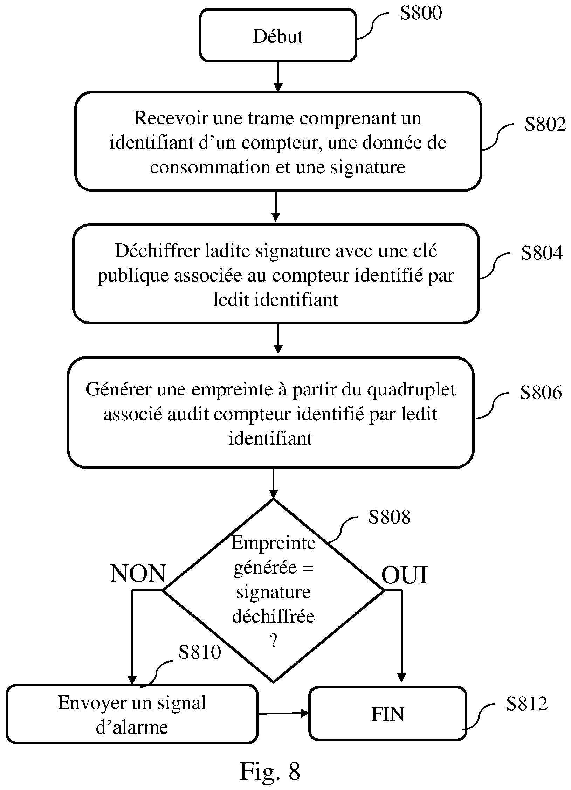

La Fig. 8 illustre un procédé de réception d'une donnée de consommation en provenance d'un compteur par un système de gestion des données de compteurs selon un mode particulier de réalisation. Le procédé est mis en œuvre dans le système d'information SI, plus particulièrement par le système de gestion des données de compteurs MDMS du système d'information SI. Le système de gestion des données de compteurs MDMS comprend notamment une mémoire non volatile dans laquelle sont stockés les numéros de série des compteurs enregistrés auprès du système d'information SI. Pour chaque compteur et donc pour chaque numéro de série le système de gestion des données de compteurs MDMS stocke également un numéro de certificat MID ainsi qu'un CRC du logiciel de métrologie.

Le procédé démarre lors d'une étape S800.

Lors d'une étape S802, le système de gestion des données de compteurs MDMS reçoit la trame T comprenant dans ses données utiles une signature HASH' et une donnée de consommation du compteur et dans son entête l'identifiant Id_{cpt} du compteur.

Lors d'une étape S804, le système de gestion des données de compteurs MDMS déchiffre ladite signature avec une clé publique associée au compteur identifié dans l'entête de la trame par l'identifiant Id_{cpt}. En effet, à partir de l'identifiant Id_{cpt} du compteur présent dans l'entête de la trame, le MDMS retrouve le numéro de série du compteur puis la clé publique associée. Le MDMS informe le KMS qu'il souhaite récupérer la clé publique associée au compteur identifié par son numéro de série et/ou par l'identifiant Id_{cpt}. Le MDMS envoie une requête à cet effet au KMS qui en retour lui renvoie la clé publique associée au compteur. Cette clé publique est utilisée pour déchiffrer la signature reçue HASH'.

Lors d'une étape S806, le MDMS génère une empreinte HASH" à partir du quadruplet associé au compteur identifié Id_{cpt}. Le quadruplet comprend le numéro de série du compteur, le CRC du logiciel de métrologie, le numéro de certificat MID associé au compteur identifié par Id_{cpt} et la donnée de consommation du compteur venant de la trame reçue par ledit MDMS, données qui sont stockées dans une mémoire non volatile du MDMS. Autrement dit, le MDMS effectue la même opération que le compteur à l'étape S702 avec les données, i.e. numéro de série, CRC du logiciel de métrologie, la donnée de consommation Idx et numéro de certificat MID, qu'il a à sa disposition pour le compteur identifié par Id_{cpt}. Notamment, le MDMS utilise à l'étape S806, la même fonction de HASH que celle utilisée à l'étape S702.

Lors d'une étape S808, le MDMS compare l'empreinte HASH" générée à l'étape S806 avec l'empreinte, résultat de la signature HASH' déchiffrée à l'étape S804. En cas d'égalité le procédé continue à l'étape S812. En effet, en cas d'égalité le MDMS est certain que la donnée de consommation présente dans la charge utile de la trame T provient bien du logiciel certifié du bon compteur, i.e. du compteur censé avoir envoyé ladite donnée de consommation, et qu'en outre cette donnée de consommation a été obtenue par une version correcte du logiciel de métrologie. En cas d'inégalité le procédé continue à l'étape S810. A l'étape S810, le MDMS envoie un signal d'alarme au système d'information SI 110 pour indiquer que la donnée de consommation reçue pose problème soit parce qu'elle ne provient pas du compteur duquel elle est censée provenir, soit parce que le logiciel de métrologie utilisé pour obtenir la donnée de consommation n'est pas correct, e.g. qu'il s'agit d'une mauvaise version du logiciel de métrologie.

Le procédé se termine à une étape S812.

Les procédés décrits en référence aux Figs 7 et 8 fonctionnent en cas de téléchargement d'un nouveau logiciel de métrologie dans un compteur. Lorsqu'un nouveau logiciel de métrologie est téléchargé dans un compteur, les clés privée et publique sont avantageusement conservées. En variante, lesdites clés sont renouvelées. Dans ce dernier cas, afin de fournir la nouvelle clé publique au SI, la nouvelle clé publique est signée avec la nouvelle clé privée et l'ensemble est resigné avec l'ancienne clé privée de manière à certifier que la nouvelle clé publique vient bien du bon compteur, ladite nouvelle clé publique étant transmise quant à elle en clair au KMS.

En référence à nouveau à la Fig. 1, considérons que le compteur 140a met en œuvre le procédé décrit en référence à la Fig. 7. Ainsi, le compteur 140a génère une trame T comprenant dans sa charge utile une donnée de consommation électrique, et une signature obtenue par la mise en œuvre des étapes S702 et S704. Le compteur 140a transmet ensuite sa trame, par exemple sur le réseau électrique, par courants porteurs en ligne à destination du concentrateur de données DC 120a. La trame générée est par exemple conforme au protocole de communication G3-PLC ou PRIME.

Le concentrateur de données DC 120a reçoit la trame T et la retransmet sur le réseau de communication 101 NET, e.g. un réseau cellulaire de type GPRS, à destination du système d'information SI 110, plus précisément à destination du HES du système d'information SI 110. A cet effet, les données contenues dans la trame T reçue sont récupérées pour être désencapsulées puis réencapsulées dans une trame compatible avec le réseau de communication 101 NET.

Le HES du SI qui est en tête de réseau reçoit la trame T et la transmet au MDMS.

Le MDMS récupère auprès du KMS la clé publique nécessaire à la vérification de la signature contenue dans la charge utile de la trame « A ».

## Revendications

1. Un procédé de transmission de données de consommation par un compteur à destination d'un système de gestion de données de compteurs, comprenant les étapes suivantes mises en œuvre par ledit compteur :
- obtenir (S301) une donnée de consommation, ladite donnée étant obtenue par un logiciel de métrologie ;
- générer (S302) une empreinte à partir d'un quadruplet comprenant ladite donnée de consommation obtenue et un triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- chiffrer (S304) ladite empreinte avec une clé privée connue du seul compteur, ladite empreinte chiffrée étant une signature ; et
- transmettre (S306) à destination du système de gestion desdites données de consommation une trame comprenant un identifiant dudit compteur, ladite donnée de consommation obtenue et ladite signature.

2. Le procédé de transmission selon la revendication 1, dans lequel générer une empreinte comprend appliquer une fonction de hachage audit quadruplet.

3. Le procédé de transmission selon la revendication 1, dans lequel la fonction de hachage appartient à l'ensemble de fonctions de hachage comprenant :
- SHA-224 de la famille SHA-3 ;
- SHA-256 de la famille SHA-3 ;
- SHA-384 de la famille SHA-3 ;
- SHA-512 de la famille SHA-3 ;
- SHA-224 de la famille SHA-2 ;
- SHA-256 de la famille SHA-2 ;
- SHA-384 de la famille SHA-2 ;
- SHA-512 de la famille SHA-2 ;
- MD-4 ;
- MD-5 ; et
- SHA-1.

4. Le procédé de transmission selon l'une des revendications 1 à 3, dans lequel chiffrer ladite empreinte avec une clé privée connue du seul compteur comprend appliquer un chiffrement asymétrique à courbes elliptiques.

5. Le procédé de transmission selon l'une des revendications 1 à 4, dans lequel lesdites données de consommation sont des données de consommation d'électricité, de gaz, d'essence, d'énergie thermique ou d'eau.

6. Un procédé de réception de données de consommation par un système de gestion desdites données de consommation, ledit système de gestion desdites données de consommation stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation, ledit procédé comprenant les étapes suivantes mises en œuvre par ledit système de gestion desdites données de consommation :
- -recevoir (S402) une trame comprenant un identifiant d'un compteur, une donnée de consommation et une signature ;
- déchiffrer (S404) ladite signature avec une clé publique associée au compteur identifié par ledit identifiant ;
- générer (S406) une empreinte à partir d'un quadruplet comprenant ledit triplet et ladite donnée de consommation reçue, ledit triplet étant associé dans ladite mémoire audit compteur identifié par ledit identifiant ;
- comparer (S408) ladite signature déchiffrée et ladite empreinte générée et en cas d'inégalité envoyer un signal d'alarme.

7. Un procédé de transmission de données de consommation par un compteur à destination d'un système de gestion desdites données de consommation, ledit système de gestion desdites données de consommation stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation, ledit procédé comprenant les étapes suivantes mises en œuvre par ledit compteur :
- obtenir (S301) une donnée de consommation, ladite donnée étant obtenue par un logiciel de métrologie ;
- générer (S302) une empreinte à partir d'un quadruplet comprenant ladite donnée de consommation obtenue et dudit triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- chiffrer (S304) ladite empreinte avec une clé privée connue du seul compteur, ladite empreinte chiffrée étant une signature ; et
- transmettre (S306) à destination du système de gestion desdites données de consommation une trame comprenant un identifiant dudit compteur, ladite donnée de consommation obtenue et ladite signature ; et
ledit procédé comprenant en outre les étapes suivantes mises en œuvre par ledit système de gestion desdites données de consommation:
- -recevoir (S402) ladite trame ;
- déchiffrer (S404) ladite signature avec une clé publique associée au compteur identifié par ledit identifiant ;
- générer (S406) une empreinte à partir d'un quadruplet comprenant ledit triplet et ladite donnée de consommation reçue, ledit triplet étant associé dans ladite mémoire audit compteur identifié par ledit identifiant ; et
- comparer (S408) ladite signature déchiffrée et ladite empreinte générée et en cas d'inégalité envoyer un signal d'alarme.

8. Un compteur configuré pour transmettre des données de consommation à un système de gestion desdites données de consommation, comprenant :
- des moyens pour obtenir une donnée de consommation, ladite donnée étant obtenue par un logiciel de métrologie ;
- des moyens pour générer une empreinte à partir d'un quadruplet comprenant ladite donnée de consommation obtenue et un triplet comprenant un numéro de série dudit compteur, un code de redondance cyclique calculé à partir dudit logiciel de métrologie et un numéro de certificat certifiant que ledit compteur est autorisé à être utilisé pour une facturation de consommation ;
- des moyens pour chiffrer ladite empreinte avec une clé privée connue du seul compteur, ladite empreinte chiffrée étant une signature ; et
- des moyens pour transmettre à destination du système de gestion desdites données de consommation une trame comprenant un identifiant dudit compteur, ladite donnée de consommation obtenue et ladite signature.

9. Un système de gestion de données de compteurs stockant en mémoire pour chaque compteur d'un ensemble de compteurs un triplet comprenant un numéro de série dudit compteur, un code de redondance cyclique d'un logiciel de métrologie et un numéro de certificat associé certifiant que ledit compteur est autorisé à être utilisé pour une facturation de consommation, ledit système de gestion de données de compteurs comprenant :
- des moyens pour recevoir une trame comprenant un identifiant d'un compteur, une donnée de consommation et une signature ;
- des moyens pour déchiffrer ladite signature avec une clé publique associée au compteur identifié par ledit identifiant ;
- des moyens pour générer une empreinte à partir d'un quadruplet comprenant ledit triplet et ladite donnée de consommation reçue, ledit triplet étant associé dans ladite mémoire audit compteur identifié par ledit identifiant ; et
- des moyens pour comparer ladite signature déchiffrée et ladite empreinte générée et en cas d'inégalité envoyer un signal d'alarme.

10. Un système de gestion automatisée configuré pour effectuer une collecte à distance de données de consommation, ledit système de gestion automatisée comprenant au moins un compteur selon la revendication 8 et un système de gestion de données de compteurs selon la revendication 9.

11. Un produit programme d'ordinateur comprenant des instructions pour mettre en œuvre le procédé de transmission selon l'une quelconque des revendications 1 à 5 ou le procédé de réception selon la revendication 6, lorsque ledit programme est exécuté par un processeur.

12. Un support de stockage stockant un programme d'ordinateur comprenant des instructions pour mettre en œuvre le procédé de transmission selon l'une quelconque des revendications 1 à 5, ou le procédé de réception selon la revendication 6 lorsque ledit programme est exécuté par un processeur.

## Patentansprüche

1. Verfahren zur Übertragung von Verbrauchsdaten durch einen Zähler an ein Verwaltungssystem von Zählerdaten, das die folgenden vom Zähler durchgeführten Schritte enthält:
- Erhalt (S301) eines Verbrauchsdatenwerts, wobei der Datenwert von einer Messtechnik-Software erhalten wird;
- Erzeugen (S302) eines Hashwerts ausgehend von einem Quadrupel, das den erhaltenen Verbrauchsdatenwert und ein Tripel enthält, das eine Seriennummer des Zählers, einen ausgehend von der Messtechnik-Software berechneten zyklischen Redundanzcode und eine Zertifikatsnummer enthält, die zertifiziert, dass der Zähler berechtigt ist, für eine Verbrauchsfakturierung verwendet zu werden;
- Verschlüsseln (S304) des Hashwerts mit einem nur dem Zähler bekannten privaten Schlüssel, wobei der verschlüsselte Hashwert eine Signatur ist; und
- Übertragen (S306) eines Rahmens an das Verwaltungssystem der Verbrauchsdaten, der eine Kennung des Zählers, den erhaltenen Verbrauchsdatenwert und die Signatur enthält.

2. Übertragungsverfahren nach Anspruch 1, wobei das Erzeugen eines Hashwerts das Anwenden einer Hashfunktion an das Quadrupel enthält.

3. Übertragungsverfahren nach Anspruch 1, wobei die Hashfunktion zur Gruppe von Hashfunktionen gehört, die enthalten:
- SHA-224 der Familie SHA-3;
- SHA-256 der Familie SHA-3;
- SHA-384 der Familie SHA-3;
- SHA-512 der Familie SHA-3;
- SHA-224 der Familie SHA-2;
- SHA-256 der Familie SHA-2;
- SHA-384 der Familie SHA-2;
- SHA-512 der Familie SHA-2;
- MD-4;
- MD-5; und
- SHA-1.

4. Übertragungsverfahren nach einem der Ansprüche 1 bis 3, wobei das Verschlüsseln des Hashwerts mit einem nur dem Zähler bekannten privaten Schlüssel die Anwendung einer asymmetrischen Verschlüsselung mit elliptischen Kurven enthält,

5. Übertragungsverfahren nach einem der Ansprüche 1 bis 4, wobei die Verbrauchsdaten Elektrizitäts-, Gas-, Benzin-, Wärmeenergie- oder Wasser-Verbrauchsdaten sind.

6. Verfahren zum Empfang von Verbrauchsdaten durch ein Verwaltungssystem der Verbrauchsdaten, wobei das Verwaltungssystem der Verbrauchsdaten für jeden Zähler einer Gruppe von Zählern ein Tripel speichert, das eine Seriennummer des Zählers, einen zyklischen Redundanzcode einer Messtechnik-Software und eine zugeordnete Zertifikatsnummer speichert, die zertifiziert, dass der Zähler berechtigt ist, für eine Verbrauchsfakturierung verwendet zu werden, wobei das Verfahren die folgenden vom Verwaltungssystem der Verbrauchsdaten durchgeführten Schritte enthält:
- Empfang (S402) eines eine Kennung eines Zählers, einen Verbrauchsdatenwert und eine Signatur enthaltenden Rahmens;
- Entschlüsselung (S404) der Signatur mit einem dem durch die Kennung identifizierten Zähler zugeordneten öffentlichen Schlüssel;
- Erzeugung (S406) eines Hashwerts ausgehend von einem das Tripel und den empfangenen Verbrauchsdatenwert enthaltenden Quadrupel, wobei das Tripel im Speicher dem durch die Kennung identifizierten Zähler zugeordnet wird;
- Vergleich (S408) der entschlüsselten Signatur und des erzeugten Hashwerts, und im Fall einer Ungleichheit, Senden eines Alarmsignals.

7. Verfahren zur Übertragung von Verbrauchsdaten durch einen Zähler an ein Verwaltungssystem der Verbrauchsdaten, wobei das Verwaltungssystem der Verbrauchsdaten für jeden Zähler einer Gruppe von Zählern ein Tripel speichert, das eine Seriennummer des Zählers, einen zyklischen Redundanzcode einer Messtechnik-Software und eine zugeordnete Zertifikatsnummer enthält, die zertifiziert, dass der Zähler berechtigt ist, für eine Verbrauchsfakturierung verwendet zu werden, wobei das Verfahren die folgenden vom Zähler durchgeführten Schritte enthält:
- Erhalt (S301) eines Verbrauchsdatenwerts, wobei der Datenwert von einer Messtechnik-Software erhalten wird;
- Erzeugen (S302) eines Hashwerts ausgehend von einem den erhaltenen Verbrauchsdatenwert enthaltenden Quadrupel und vom Tripel, das eine Seriennummer des Zählers, einen ausgehend von der Messtechnik-Software berechneten zyklischen Redundanzcode und eine Zertifikatsnummer enthält, die zertifiziert, dass der Zähler berechtigt ist, für eine Verbrauchsfakturierung verwendet zu werden;
- Verschlüsseln (S304) des Hashwerts mit einem nur dem Zähler bekannten privaten Schlüssel, wobei der verschlüsselte Hashwert eine Signatur ist; und
- Übertragen (S306) eines Rahmens an das Verwaltungssystem der Verbrauchsdaten, der eine Kennung des Zählers, den erhaltenen Verbrauchsdatenwert und die Signatur enthält; und
das Verfahren außerdem die folgenden vom Verwaltungssystem der Verbrauchsdaten durchgeführten Schritte enthält:
- Empfang (S402) des Rahmens;
- Entschlüsseln (S404) der Signatur mit einem dem durch die Kennung identifizierten Zähler zugeordneten öffentlichen Schlüssel;
- Erzeugen (S406) eines Hashwerts ausgehend von einem das Tripel und den empfangenen Verbrauchsdatenwert enthaltenden Quadrupel, wobei das Tripel im Speicher dem durch die Kennung identifizierten Zähler zugeordnet wird; und
- Vergleich (S408) der entschlüsselten Signatur und des erzeugten Hashwerts, und im Fall einer Ungleichheit, Senden eines Alarmsignals.

8. Zähler, der konfiguriert ist, Verbrauchsdaten an ein Verwaltungssystem der Verbrauchsdaten zu übertragen, der enthält:
- Einrichtungen, um einen Verbrauchsdatenwert zu erhalten, wobei der Datenwert durch eine Messtechnik-Software erhalten wird;
- Einrichtungen, um einen Hashwert ausgehend von einem Quadrupel zu erzeugen, das den erhaltenen Verbrauchsdatenwert und ein Tripel enthält, das eine Seriennummer des Zählers, einen ausgehend von der Messtechnik-Software berechneten zyklischen Redundanzcode und eine Zertifikatsnummer enthält, die zertifiziert, dass der Zähler berechtigt ist, für eine Verbrauchsfakturierung verwendet zu werden;
- Einrichtungen, um den Hashwert mit einem nur dem Zähler bekannten privaten Schlüssel zu verschlüsseln, wobei der verschlüsselte Hashwert eine Signatur ist; und
- Einrichtungen, um an das Verwaltungssystem der Verbrauchsdaten einen Rahmen zu übertragen, der eine Kennung des Zählers, den erhaltenen Verbrauchsdatenwert und die Signatur enthält.

9. System zur Verwaltung von Daten von Zählern, das für jeden Zähler einer Gruppe von Zählern ein Tripel speichert, das eine Seriennummer des Zählers, einen zyklischen Redundanzcode einer Messtechnik-Software und eine zugeordnete Zertifikatsnummer enthält, die zertifiziert, dass der Zähler berechtigt ist, für eine Verbrauchsfakturierung verwendet zu werden, wobei das Zählerdaten-Verwaltungssystem enthält:
- Einrichtungen, um einen Rahmen zu empfangen, der eine Kennung eines Zählers, einen Verbrauchsdatenwert und eine Signatur enthält;
- Einrichtungen, um die Signatur mit einem dem durch die Kennung identifizierten Zähler zugeordneten öffentlichen Schlüssel zu entschlüsseln;
- Einrichtungen, um ausgehend von einem Quadrupel, das das Tripel und den empfangenen Verbrauchsdatenwert enthält, einen Hashwert zu erzeugen, wobei das Tripel im Speicher dem durch die Kennung identifizierten Zähler zugeordnet wird; und
- Einrichtungen, um die entschlüsselte Signatur und den erzeugten Hashwert zu vergleichen, und im Fall einer Ungleichheit ein Alarmsignal zu senden.

10. Automatisiertes Verwaltungssystem, das konfiguriert ist, eine Fernerfassung von Verbrauchsdaten auszuführen, wobei das automatisierte Verwaltungssystem mindestens einen Zähler nach Anspruch 8 und ein Verwaltungssystem von Zählerdaten nach Anspruch 9 enthält.

11. Computerprogrammprodukt, das Anweisungen zur Durchführung des Übertragungsverfahrens nach einem der Ansprüche 1 bis 5 oder des Empfangsverfahrens nach Anspruch 6 enthält, wenn das Programm von einem Prozessor ausgeführt wird.

12. Speicherträger, der ein Computerprogramm speichert, das Anweisungen zur Durchführung des Übertragungsverfahrens nach einem der Ansprüche 1 bis 5 oder des Empfangsverfahrens nach Anspruch 6 enthält, wenn das Programm von einem Prozessor ausgeführt wird.

## Claims

1. A method for transmitting consumption data by a meter intended for a meter data management system, comprising the following steps performed by said meter:
- obtaining (S301) consumption data, said data being obtained by metrology software;
- generating (S302) a hashcode from a quadruplet comprising said consumption data obtained and a triplet comprising a serial number of said meter, a cyclic redundancy code calculated from said metrology software and a certificate number certifying that said meter is authorised to be used for invoicing consumption;
- encrypting (S304) said hashcode with a private key known solely to the meter, said encrypted hashcode being a signature; and
- transmitting (S306), to the system managing said consumption data, a frame comprising an identifier of said meter, said consumption data obtained and said signature.

2. The transmission method according to claim 1, wherein generating a hashcode comprises applying a hash function to said quadruplet.

3. The transmission method according to claim 1, wherein the hash function belongs to the set of hash functions comprising:
- SHA-224 of the family SHA-3 ;
- SHA-256 of the family SHA-3 ;
- SHA-384 of the family SHA-3 ;
- SHA-512 of the family SHA-3 ;
- SHA-224 of the family SHA-2 ;
- SHA-256 of the family SHA-2 ;
- SHA-384 of the family SHA-2 ;
- SHA-512 of the family SHA-2 ;
- MD-4 ;
- MD-5 ; and
- SHA-1.

4. The transmission method according to one of claims 1 to 3, wherein encrypting said hashcode with a private key known solely to the meter comprises applying an elliptic curve asymmetric encryption.

5. The transmission method according to one of claims 1 to 4, wherein said consumption data are data on consumption of electricity, gas, petrol, thermal energy or water.

6. A method for receiving consumption data by a system for managing said consumption data, said system for managing said consumption data storing in memory, for each meter in a set of meters, a triplet comprising a serial number of said meter, a cyclic redundancy code of metrology software and an associated certificate number certifying that said meter is authorised to be used for invoicing consumption, said method comprising the following steps performed by said system for managing said consumption data:
- receiving (S402) a frame comprising an identifier of a meter, consumption data and a signature;
- decrypting (S404) said signature with a public key associated with the meter identified by said identifier;
- generating (S406) a hashcode from a quadruplet comprising said triplet and said consumption data received, said triplet being associated in said memory with said meter identified by said identifier;
- comparing (S408) said decrypted signature and said generated hashcode and, in the case of inequality, sending an alarm signal.

7. A method for transmitting consumption data by a meter intended for a system for managing said consumption data, said system for managing said consumption data storing in memory, for each meter in a set of meters, a triplet comprising a serial number of said meter, a cyclic redundancy code of metrology software and an associated certificate number certifying that said meter is authorised to be used for invoicing consumption, said method comprising the following steps performed by said meter:
- obtaining (S301) consumption data, said data being obtained by metrology software;
- generating (S302) a hashcode from a quadruplet comprising said consumption data obtained and from said triplet comprising a serial number of said meter, a cyclic redundancy code calculated from said metrology software and a certificate number certifying that said meter is authorised to be used for invoicing consumption;
- encrypting (S304) said hashcode with a private key known solely to the meter, said encrypted hashcode being a signature; and
- transmitting (S306), to the system managing said consumption data, a frame comprising an identifier of said meter, said consumption data obtained and said signature,
said method further comprises the following steps performed by said system for managing said consumption data:
- receiving (S402) said frame;
- decrypting (S404) said signature with a public key associated with the meter identified by said identifier;
- generating (S406) a hashcode from a quadruplet comprising said triplet and said consumption data received, said triplet being associated in said memory with said meter identified by said identifier;
- comparing (S408) said decrypted signature and said generated hashcode and, in the case of inequality, sending an alarm signal.

8. A meter configured to transmit consumption data to a system for managing said consumption data, comprising:
- means for obtaining consumption data, said data being obtained by metrology software;
- means for generating a hashcode from a quadruplet comprising said consumption data received and a triplet comprising a serial number of said meter, a cyclic redundancy code calculated from said metrology software and a certificate number certifying that said meter is authorised to be used for invoicing consumption;
- means for encrypting said hashcode with a private key known solely to the meter, said encrypted hashcode being a signature; and
- mean for transmitting, to the system managing said consumption data, a frame comprising an identifier of said meter, said consumption data obtained and said signature.

9. A system for managing data from meters storing in memory, for each meter in a set of meters, a triplet comprising a serial number of said meter, a cyclic redundancy code of metrology software and an associated certificate number certifying that said meter is authorised to be used for invoicing consumption, said meter data management system comprising:
- means for receiving a frame comprising an identifier of a meter, consumption data and a signature;
- means for decrypting said signature with a public key associated with the meter identified by said identifier;
- means for generating a hashcode from a quadruplet comprising said triplet and said consumption data received, said triplet being associated in said memory with said meter identified by said identifier;
- means for comparing said decrypted signature and said generated hashcode and, in the case of inequality, sending an alarm signal.

10. An automated management system configured to make a remote collection of consumption data, said automated management system comprising at least one meter according to claim 8 and a meter data management system according to claim 9.

11. A computer program product comprising instructions for implementing the transmission method according to any one of claims 1 to 5 or the reception method according to claim 6, when said program is executed by a processor.

12. A storage medium storing a computer program comprising instructions for implementing the transmission method according to any one of claims 1 to 5 or the reception method according to claim 6, when said program is executed by a processor.
